# EUROPÄISCHE PATENTSCHRIFT

(11) **EP 3 554 864 B1**
(45) Veröffentlichungstag und Bekanntmachung des Hinweises auf die Patenterteilung: **28.07.2021**
(21) Anmeldenummer: 17826167.3
(22) Anmeldetag: 13.12.2017
(51) Int. Cl.: B60C 23/04

(54) **ELEKTRONISCHE RADEINHEIT UND STEUEREINRICHTUNG FÜR EIN RADÜBERWACHUNGSSYSTEM EINES FAHRZEUGES, RADÜBERWACHUNGSSYSTEM FÜR EIN FAHRZEUG SOWIE VERFAHREN ZUR RADÜBERWACHUNG IN EINEM FAHRZEUG**
ELECTRONIC WHEEL UNIT AND CONTROL DEVICE FOR A WHEEL-MONITORING SYSTEM OF A VEHICLE, WHEEL-MONITORING SYSTEM FOR A VEHICLE AND METHOD FOR MONITORING WHEELS IN A VEHICLE
UNITÉ DE ROUE ÉLECTRONIQUE ET DISPOSITIF DE COMMANDE POUR UN SYSTÈME DE SURVEILLANCE DE ROUE D'UN VÉHICULE, SYSTÈME DE SURVEILLANCE DE ROUE POUR UN VÉHICULE AINSI QUE PROCÉDÉ DE SURVEILLANCE DE ROUE DANS UN VÉHICULE

(30) Priorität: 19.12.2016 DE 102016225496
(43) Veröffentlichungstag der Anmeldung: 23.10.2019
(73) Patentinhaber: Continental Automotive GmbH, 30165 Hannover (DE)
(72) Erfinder: KRAUS, Johannes, 93152 Nittendorf (DE); HAAS, Thomas, 93093 Donaustauf (DE); BRÜCKL, Christian, 93170 Bernhardswald (DE); PFLUGMANN, Marc-Michael, 94369 Rain (DE)
(74) Vertreter: Continental Corporation
(86) Internationale Anmeldenummer: PCT/EP2017/082612
(87) Internationale Veröffentlichungsnummer: WO 2018/114524

(56) Entgegenhaltungen:
- EP-A1- 2 982 523
- WO-A1-2015/009595
- US-A1- 2010 033 316
- US-A1- 2010 225 464

## Beschreibung

Die vorliegende Erfindung betrifft eine elektronische Radeinheit für ein Radüberwachungssystem eines mit Fahrzeugrädern ausgestatteten Fahrzeuges, wobei die elektronische Radeinheit dazu ausgebildet ist, an einem der Fahrzeugräder angeordnet wenigstens einen Radbetriebsparameter des Fahrzeugrades zu erfassen und entsprechende Radbetriebsdatentelegramme gemäß eines Datenübertragungsprotokolls per Funk an eine zum Empfangen und Auswerten der Radbetriebsdatentelegramme ausgebildete Steuereinrichtung des Fahrzeuges zu senden.

Ferner betrifft die vorliegende Erfindung eine Steuereinrichtung für ein Radüberwachungssystem eines mit Fahrzeugrädern ausgestatteten Fahrzeuges, wobei wenigstens eines der Fahrzeugräder mit einer daran angeordneten elektronischen Radeinheit zum Erfassen wenigstens eines Radbetriebsparameters des jeweiligen Fahrzeugrades und zum Senden entsprechender Radbetriebsdatentelegramme gemäß eines Datenübertragungsprotokolls per Funk an die Steuereinrichtung ausgestattet ist, wobei die Steuereinrichtung dazu ausgebildet ist, die Radbetriebsdatentelegramme zu empfangen und auszuwerten.

Ferner betrifft die vorliegende Erfindung ein Radüberwachungssystem, sowie ein Verfahren zur Radüberwachung in einem mit Fahrzeugrädern ausgestatteten Fahrzeug, wobei an wenigstens einem der Fahrzeugräder wenigstens ein Radbetriebsparameter des Fahrzeugrades mittels einer an dem Fahrzeugrad angeordneten elektronischen Radeinheit erfasst wird und mittels der elektronischen Radeinheit entsprechende Radbetriebsdatentelegramme gemäß eines Datenübertragungsprotokolls per Funk an eine zum Empfangen und Auswerten der Radbetriebsdatentelegramme ausgebildete Steuereinrichtung des Fahrzeuges gesendet werden.

Derartige elektronische Radeinheiten, Steuereinrichtungen und damit realisierte Systeme und Verfahren zur Radüberwachung kommen insbesondere bei so genannten Reifendrucküberwachungssystemen (englisch "tire pressure monitoring systems", kurz TPMS) zum Einsatz.

Bei bekannten Reifendrucküberwachungssystemen sind die an den Fahrzeugrädern des Fahrzeuges angeordneten elektronischen Radeinheiten jeweils dazu ausgebildet, als Radbetriebsparameter zumindest einen Reifendruck des betreffenden, aus einer Felge und einem daran montieren Reifen gebildeten Fahrzeugrades zu messen.

Entsprechende Radbetriebsdatentelegramme, also enthaltend zumindest eine Information über den gemessenen Reifendruck, werden von Zeit zu Zeit gemäß eines vorgegebenen Datenübertragungsprotokolls per Funk an die fahrzeugseitig angeordnete Steuereinrichtung gesendet.

Das Empfangen und Auswerten der Radbetriebsdatentelegramme seitens der Steuereinrichtung setzt voraus, dass jede elektronische Radeinheit zum Senden der Radbetriebsdatentelegramme das zu der Steuereinrichtung passende Datenübertragungsprotokoll verwendet.

Da verschiedene Fahrzeughersteller bzw. verschiedene Fahrzeugtypen typischerweise ein Hersteller-spezifisches bzw. Fahrzeugtyp-spezifisches Datenübertragungsprotokoll entsprechend der in dem Fahrzeug verbauten Steuereinrichtung verlangen, ergibt sich für das Ersatzteilgeschäft im Falle eines Ersatzes einer oder mehrerer elektronischer Radeinheiten das Problem, dass eine Vielzahl verschiedener Varianten der elektronischen Radeinheit (entsprechend den verschiedenen Datenübertragungsprotokollen) vorzuhalten ist, um im Einzelfall die jeweils passende Variante liefern bzw. an einem betreffenden Fahrzeugrad montieren zu können.

Alternativ oder zusätzlich zur Bevorratung einer Vielzahl verschiedener Varianten einer elektronischen Radeinheit kommt zwar in Betracht, eine elektronische Radeinheit mit einem im Einzelfall anpassbaren Datenübertragungsprotokoll vorzusehen. In diesem Fall verbleibt jedoch ein erheblicher zeitlicher bzw. logistischer Aufwand für die konkrete Durchführung einer solchen Anpassung. Auch erfordert dies eine aufwändige bzw. teure Werkstattausstattung, z. B. spezielle Geräte zur Umprogrammierung oder Neuprogrammierung elektronischer Radeinheiten.

Aus der US 2010/225464 A1 ist eine elektronische Radeinheit gemäß dem Oberbegriff des Anspruchs 1 bekannt.

Aus der US 2010/033316 A1 ist ein Reifeninformationsverwaltungssystem bekannt, bei dem ein fahrzeugseitiges Modul eine Messeinrichtung zur Messung der Stärke empfangener elektromagnetischer Wellen enthält, um für jedes Sensormodul die Stärke elektromagnetischer Wellen von Datensignalen zu messen, die von dem Sensormodul gesendet werden, und das angepasst ist, um einen Einstellwert für die Stärke der zu sendenden elektromagnetischen Wellen zu erzeugen, der bei der nächsten Datenübertragung durch das Sensormodul in Übereinstimmung mit der Stärke der empfangenen elektromagnetischen Wellen der von dem Sensormodul gesendeten Datensignale verwendet wird, und den Einstellwert für die Stärke der zu sendenden elektromagnetischen Wellen einem Befehl an das Sensormodul bei der nächsten Anforderung der Datenübertragung an dieses hinzuzufügen. Das Sensormodul enthält eine Steuereinrichtung für die Stärke zu sendender elektromagnetischer Wellen zum Steuern der Stärke elektromagnetischer Wellen bei der Datenübertragung. Die Steuereinrichtung für die Stärke der zu sendenden elektromagnetischen Wellen ist dazu ausgelegt, die Stärke der zu sendenden elektromagnetischen Wellen während der nächsten Datenübertragung auf der Grundlage eines von dem fahrzeugseitigen Modul empfangenen Einstellwerts für die Stärke der sendenden elektromagnetischen Wellen zu steuern.

Aus der EP 2 982 523 A1 ist ein Reifendrucksensor für Kraftfahrzeuge bekannt mit einem Gehäuse, einer in dem Gehäuse aufgenommenen integrierten Schaltung (Sensor-IC), wobei die Sensor-IC einen Microcontroller und einen Drucksensor aufweist. Es sind in dem Gehäuse Mittel zur drahtlosen Kommunikation angeordnet, welche mit dem Microcontroller gekoppelt sind, um mittels des Drucksensors erfasste Druckmesswerte an eine entfernte Empfangseinrichtung zu übermitteln. Die Sensor-IC hat einen internen Speicher, in welchem ausführbare Anweisungen und Daten speicherbar sind, welche bei Ausführung die Erfassung und Übermittlung von Druckmessdaten bewirken. Die Sensor-IC ist mit einem im Gehäuse angeordneten zusätzlichen Speicherbaustein gekoppelt, wobei in dem Speicherbaustein eine Mehrzahl von unterschiedlichen Datenpaketen mit jeweiligen Anweisungen oder Daten gespeichert sind. Der zusätzliche Speicherbaustein ist durch den Microcontroller ansteuerbar, um ein ausgewähltes Datenpaket in den internen Speicher zu kopieren und der Microcontroller kontrolliert die Spannungsversorgung des zusätzlichen Speicherbausteins derart, dass der zusätzliche Speicher in einen energiesparenden Modus schaltbar ist.

Die WO 2015/009595 A1 betrifft das Aufzeichnen und Speichern von Identifikationsinformationen von Reifendrucküberwachungssensoren und das Übermitteln der gespeicherten Identifikationsinformationen an ein Reifendrucküberwachungssystem. In einem ersten Aspekt wird ein Verfahren zum Integrieren eines oder mehrerer Reifendrucküberwachungssensoren in ein Reifendrucküberwachungssystem eines Fahrzeugs bereitgestellt. Das Verfahren umfasst das Programmieren und/oder Konfigurieren eines Reifendrucküberwachungssensors mit einer geeigneten Programmsoftware für ein Reifendrucküberwachungssystem eines Fahrzeugs. Das Verfahren umfasst auch die Verwendung eines Konfigurationstools, um den Reifendrucküberwachungssensor zu veranlassen, ein Signal mit einer Kennung zu erzeugen. Das Verfahren umfasst ferner das Aufzeichnen der Kennung auf einer Speichervorrichtung des Konfigurationstools. Das Verfahren umfasst ferner das Übertragen der aufgezeichneten Kennung von dem Konfigurationstool an eine Speichervorrichtung eines Fahrzeugs, wenn das Fahrzeug in einen Lernmodus eintritt.

Es ist daher eine Aufgabe der vorliegenden Erfindung, die vorstehend beschriebenen Probleme zu vermeiden und insbesondere Radüberwachungssysteme bzw. Radüberwachungsverfahren mit einer universelleren und komfortableren Verwendbarkeit von elektronischen Radeinheiten zu ermöglichen.

Ein erster Aspekt der Erfindung betrifft eine elektronische Radeinheit für ein Radüberwachungssystem eines mit Fahrzeugrädern ausgestatteten Fahrzeuges, wobei die elektronische Radeinheit dazu ausgebildet ist, an einem der Fahrzeugräder angeordnet wenigstens einen Radbetriebsparameter des Fahrzeugrades zu erfassen und Radbetriebsdatentelegramme gemäß eines Datenübertragungsprotokolls per Funk an eine zum Empfangen und Auswerten der Radbetriebsdatentelegramme ausgebildete Steuereinrichtung des Fahrzeuges zu senden. Die elektronische Radeinheit ist ferner dazu ausgebildet, das zum Senden der Radbetriebsdatentelegramme zu verwendende Datenübertragungsprotokoll anhand von Daten, nachfolgend als Spezifikationsdaten bezeichnet, festzulegen, die zuvor von der Steuereinrichtung des Fahrzeuges an die elektronische Radeinheit übermittelt wurden, insbesondere von der Steuereinrichtung des Fahrzeuges in drahtloser Weise an die elektronische Radeinheit übermittelt wurden.

Mit einer derartigen elektronischen Radeinheit kann vorteilhaft das zum Senden der Radbetriebsdatentelegramme verwendete Datenübertragungsprotokoll automatisch angepasst werden.

Ein zweiter Aspekt der Erfindung betrifft eine Steuereinrichtung für ein Radüberwachungssystem eines mit Fahrzeugrädern ausgestatteten Fahrzeuges, wobei wenigstens eines der Fahrzeugräder mit einer daran angeordneten elektronischen Radeinheit zum Erfassen wenigstens eines Radbetriebsparameters des jeweiligen Fahrzeugrades und zum Senden von Radbetriebsdatentelegrammen gemäß eines Datenübertragungsprotokolls per Funk an die Steuereinrichtung ausgestattet ist, wobei die Steuereinrichtung dazu ausgebildet ist, die Radbetriebsdatentelegramme zu empfangen und auszuwerten. Die Steuereinrichtung ist ferner dazu ausgebildet, Spezifikationsdaten an die elektronische Radeinheit zu übermitteln, anhand derer der elektronischen Radeinheit eine Festlegung des zum Senden der Radbetriebsdatentelegramme zu verwendenden Datenübertragungsprotokolls ermöglicht wird. Insbesondere kann die Steuereinrichtung dazu ausgebildet sein, die Spezifikationsdaten in drahtloser Weise an die elektronische Radeinheit zu übermitteln.

Mit einer derartigen Steuereinrichtung kann einer im betreffenden Radüberwachungssystem enthaltenen elektronischen Radeinheit eine automatische Anpassung des zum Senden verwendeten Datenübertragungsprotokolls ermöglicht bzw. weiter vereinfacht werden.

Ein weiterer Aspekt der Erfindung betrifft ein Radüberwachungssystem für ein mit Fahrzeugrädern ausgestattetes Fahrzeug, das zumindest eine elektronische Radeinheit der oben oder im Folgenden genannten Art und/oder eine Steuereinrichtung der oben oder im Folgenden genannten Art aufweist.

Ein weiterer Aspekt der Erfindung betrifft ein Verfahren zur Radüberwachung in einem mit Fahrzeugrädern ausgestatteten Fahrzeug, wobei an wenigstens einem der Fahrzeugräder wenigstens ein Radbetriebsparameter des Fahrzeugrades mittels einer an dem Fahrzeugrad angeordneten elektronischen Radeinheit erfasst wird und mittels der elektronischen Radeinheit Radbetriebsdatentelegramme gemäß eines Datenübertragungsprotokolls per Funk an eine zum Empfangen und Auswerten der Radbetriebsdatentelegramme ausgebildete Steuereinrichtung des Fahrzeuges gesendet werden, wobei in der elektronischen Radeinheit das zum Senden der Radbetriebsdatentelegramme verwendete Datenübertragungsprotokoll anhand von Spezifikationsdaten festgelegt wird, die zuvor von der Steuereinrichtung des Fahrzeuges insbesondere in drahtloser Weise an die elektronische Radeinheit übermittelt wurden.

Ein weiterer Aspekt der Erfindung betrifft ein Computerprogrammprodukt, aufweisend einen Programmcode, der auf einer Datenverarbeitungseinrichtung (z. B. einer Datenverarbeitungseinrichtung der elektronischen Radeinheit und/oder der Steuereinrichtung) ausgeführt ein Radüberwachungsverfahren der oben oder im Folgenden genannten Art durchführt.

Die elektronische Radeinheit kann z. B. batteriebetrieben sein und kann z. B. im Falle eines aus einer Felge und einem daran montierten Reifen gebildeten Fahrzeugrades an der Felge oder an dem Reifen angeordnet sein, z. B. an einer Innenseite einer Reifenlauffläche des Reifens. Auch kann die Radeinheit z. B. an dem innenliegenden Ende eines (Luft-)Ventilschafts angeordnet sein.

Die elektronische Radeinheit kann zum Erfassen des wenigstens einen Radbetriebsparameters wenigstens einen Sensor zur Messung des oder der Radbetriebsparameter aufweisen.

Bevorzugt weist die elektronische Radeinheit eine programmgesteuerte Rechnereinheit mit zugeordneter Speichereinheit auf, z. B. um Sensorsignale eines oder mehrerer Sensoren einer weiteren Verarbeitung und/oder Auswertung zu unterziehen, und um die zu sendenden Radbetriebsdatentelegramme zu erzeugen. In der Speichereinheit können ein den Betrieb der Rechnereinheit steuernder Programmcode und auch weitere Daten gespeichert sein.

Weitere in der Speichereinheit der elektronischen Radeinheit gespeicherte Daten können insbesondere Raddaten beinhalten. Darunter sind ganz allgemein an dem betreffenden Fahrzeugrad messbare physikalische Eigenschaften (z. B. Felgen- und/oder Reifenabmessungen wie Felgendurchmesser bzw. Reifendurchmesser etc.) sowie sonstige Eigenschaften (z. B. Hersteller, Reifentyp, Reifen-DOT-Code etc.) des betreffenden Fahrzeugrades zu verstehen, welche im Wesentlichen lediglich von der Beschaffenheit des Rades selbst abhängen bzw. nicht unmittelbar vom aktuellen Betrieb des Fahrzeugrades abhängen.

Die Raddaten können z. B. von Werkstattpersonal im Rahmen eines Rad- bzw. Reifenwechsels in die betreffende elektronische Radeinheit bzw. in die betreffenden elektronischen Radeinheiten eingespeichert werden.

Schließlich weist die elektronische Radeinheit eine Funksendeeinheit zum Senden der Radbetriebsdatentelegramme auf.

In einer Ausführungsform weist die elektronische Radeinheit eine Funkempfangseinheit zum Empfangen von per Funk gesendeten Spezifikationsdaten auf.

Die Funkempfangseinheit der elektronischen Radeinheit kann hierbei mit der Funksendeeinheit der elektronischen Radeinheit baulich zusammengefasst als Funksende- und Empfangseinheit der elektronischen Radeinheit ausgebildet sein. Damit kann z. B. eine bidirektionale Funkdatenverbindung zwischen der elektronischen Radeinheit und der Steuereinrichtung realisiert werden.

In einer Ausführungsform der elektronischen Radeinheit ist vorgesehen, dass die Spezifikationsdaten Einstellparameter beinhalten und die elektronische Radeinheit dazu ausgebildet ist, das zu verwendende Datenübertragungsprotokoll gemäß der Einstellparameter einzustellen.

In diesem Fall ist in der elektronischen Radeinheit bereits ein zum Senden zu verwendendes Datenübertragungsprotokoll grob definiert, jedoch hinsichtlich vorbestimmter Protokolldetails noch einstellbar. Die konkrete Einstellung kann anhand der übermittelten Einstellparameter vorgenommen werden.

In einer Ausführungsform ist vorgesehen, dass die Spezifikationsdaten einen Programmcode beinhalten und die elektronische Radeinheit dazu ausgebildet ist, den Programmcode für eine Steuerung einer Erzeugung der Radbetriebsdatentelegramme ablaufen zu lassen.

In diesem Fall ist es entbehrlich, dass in der elektronischen Radeinheit ein Datenübertragungsprotokoll vorab definiert ist, da der übermittelte Programmcode ein solches Datenübertagungsprotokoll definieren kann und insbesondere z. B. einen vollständigen Algorithmus zur Erzeugung der Radbetriebsdatentelegramme gemäß dieses Datenübertragungsprotokolls darstellen kann.

In einer Ausführungsform ist vorgesehen, dass die Spezifikationsdaten eine Identifikation der Steuereinrichtung und/oder des Fahrzeuges beinhalten und die elektronische Radeinheit dazu ausgebildet ist, das zu verwendende Datenübertragungsprotokoll aus einer Mehrzahl von in der elektronischen Radeinheit vorab gespeicherten Datenübertragungsprotokollen gemäß der Identifikation auszuwählen.

In diesem Fall sind in der elektronischen Radeinheit vorab mehrere Datenübertragungsprotokolle jeweils mit zugeordneter Identifikation einer Steuereinrichtung (bzw. eines Steuereinrichtungstyps) und/oder eines Fahrzeuges (bzw. eines Fahrzeugtyps) gespeichert. Anhand der übermittelten Identifikation kann die elektronische Radeinheit somit ein im konkreten Fall passendes Datenübertragungsprotokoll auswählen. Speziell in diesem Zusammenhang ist der Begriff (vorab gespeichertes) Datenübertragungsprotokoll so zu verstehen, dass jedes solche Datenübertragungsprotokoll gegebenenfalls z. B. nur durch Einstellparameter und/oder Programmcode der bereits erläuterten Art repräsentiert sein kann.

Betreffend die drei vorstehend erläuterten möglichen Inhalte der Spezifikationsdaten (Einstellparameter, Programmcode, Identifikation) sind auch beliebige Kombinationen möglich, d. h. Ausführungsformen, bei denen die elektronische Radeinheit bei der Festlegung des Datenübertragungsprotokolls nicht auf genau einen der genannten Inhalte angewiesen ist, sondern zur Nutzung von zweien oder sogar allen dreien dieser Inhalte ausgebildet ist.

In einer Ausführungsform ist die elektronische Radeinheit ferner dazu ausgebildet, einen die elektronische Radeinheit identifizierenden Identifikationscode an die Steuereinrichtung des Fahrzeuges zu senden, bevorzugt als eine Datenkomponente des von der elektronischen Radeinheit gesendeten Radbetriebsdatentelegramms. Anhand dieses Identifikationscodes kann die Steuereinrichtung im Rahmen der Auswertung vorteilhaft eine Zuordnung der empfangenen Radbetriebsdaten zu einer jeweiligen Verbauposition des betreffenden Fahrzeugrades vornehmen, was auch als Lokalisierung bzw. als Lokalisierungsverfahren bezeichnet wird.

Im Rahmen der vorliegenden Erfindung ist es denkbar, dass ein solcher von der elektronischen Radeinheit zu der Steuereinrichtung gesendeter Identifikationscode von der Steuereinrichtung als eine Aufforderung zur Übermittlung der Spezifikationsdaten und/oder für eine Festlegung der konkreten Art der zu übermittelnden Spezifikationsdaten interpretiert wird.

Alternativ oder zusätzlich zum Senden eines Identifikationscodes von der elektronischen Radeinheit zu der Steuereinrichtung kommt auch in Betracht, dass ein speziell als Aufforderung zur Übermittlung von Spezifikationsdaten vorbestimmtes Aufforderungssignal an die Steuereinrichtung gesendet wird, woraufhin diese eine Übermittlung der Spezifikationsdaten durchführt. Ein solches Aufforderungssignal kann gegebenenfalls auch eine von der elektronischen Radeinheit gewünschte bzw. erforderte Art von Spezifikationsdaten definieren.

Erfindungsgemäß ist die elektronische Radeinheit somit dazu ausgebildet, an die Steuereinrichtung ein Aufforderungssignal als Aufforderung zur Übermittlung der Spezifikationsdaten zu senden. Das Aufforderungssignal kann dabei, wie bereits erläutert, den Identifikationscode beinhalten und/oder als ein vorbestimmtes Aufforderungssignal ausgebildet sein.

Die erfindungsgemäße Steuereinrichtung weist bevorzugt eine programmgesteuerte Rechnereinheit mitsamt zugeordneter Speichereinheit auf. In der Speichereinheit können ein den Betrieb der Rechnereinheit steuernder Programmcode und auch weitere Daten gespeichert sein, wie insbesondere z. B. die zu übermittelnden Spezifikationsdaten.

In einer Weiterbildung ist die Steuereinrichtung dazu ausgebildet, die Spezifikationsdaten zumindest teilweise, d.h. ganz oder teilweise, von einem externen Datenserver, d.h. einem fahrzeugexternen Datenserver, zu beziehen (z. B. über einen mittels einer Mobilfunkeinrichtung des Fahrzeuges realisierten Internetanschluss des Fahrzeuges).

Die Steuereinrichtung kann zum Empfangen der Radbetriebsdatentelegramme eine Funkempfangseinheit aufweisen, die im Falle einer Mehrzahl von an dem betreffenden Fahrzeug verbauten elektronischen Radeinheiten die Radbetriebsdatentelegramme sämtlicher elektronischer Radeinheiten empfangen kann.

In einer Ausführungsform der erfindungsgemäßen Steuereinrichtung weist diese eine Funksendeeinheit zum Senden der Spezifikationsdaten per Funk an die elektronische Radeinheit bzw. an die elektronischen Radeinheiten auf.

Die Funksendeeinheit der Steuereinrichtung kann hierbei mit der Funkempfangseinheit der Steuereinrichtung baulich zusammengefasst als Funksende- und Empfangseinheit der Steuereinrichtung ausgebildet sein. Damit kann z. B. eine bidirektionale Funkdatenverbindung zwischen der Steuereinrichtung und der elektronischen Radeinheit realisiert werden.

In einer Ausführungsform der erfindungsgemäßen Steuereinrichtung ist vorgesehen, dass die Spezifikationsdaten Einstellparameter beinhalten, um der elektronischen Radeinheit zu ermöglichen, das zu verwendende Datenübertragungsprotokoll gemäß der Einstellparameter einzustellen.

In diesem Fall können z. B. fest vorgegebene Einstellparameter vorgesehen sein, die z. B. zwischen Herstellern von Fahrzeugen bzw. Steuereinrichtungen und Herstellern von elektronischen Radeinheiten vereinbart wurden.

In einer Ausführungsform ist vorgesehen, dass die Spezifikationsdaten einen Programmcode beinhalten, um der elektronischen Radeinheit zu ermöglichen, den Programmcode für eine Steuerung einer Erzeugung der Radbetriebsdatentelegramme ablaufen zu lassen.

In diesem Fall besteht eine besonders große Variationsbreite, was die in der elektronischen Radeinheit erfolgende konkrete Festlegung des Datenübertragungsprotokolls anbelangt.

In einer Ausführungsform ist vorgesehen, dass die Spezifikationsdaten eine Identifikation der Steuereinrichtung und/oder des Fahrzeuges beinhalten, um der elektronischen Radeinheit zu ermöglichen, das zu verwendende Datenübertragungsprotokoll aus einer Mehrzahl von in der elektronischen Radeinheit vorab gespeicherten Datenübertragungsprotokollen gemäß der Identifikation auszuwählen.

In diesem Fall kann sich eine Identifikation der Steuereinrichtung bzw. des Fahrzeuges z. B. auf einen Typ (ein Modell) der Steuereinrichtung bzw. des Fahrzeuges beziehen und muss somit keine eindeutige Identifikation der Steuereinrichtung bzw. des Fahrzeuges darstellen.

Betreffend die drei vorstehend genannten möglichen Inhalte der Spezifikationsdaten (Einstellparameter, Programmcode, Identifikation) können auch Ausführungsformen der Steuereinrichtung realisiert sein, bei welchen derartige Inhalte kombiniert werden, also die Steuereinrichtung in der Lage ist, Spezifikationsdaten zu übermitteln, die zugleich zwei oder sogar alle drei der vorgenannten Inhalte besitzen (z. B. in Abhängigkeit von einer zuvor von der elektronischen Radeinheit abgegebenen Aufforderung zur Übermittlung von Spezifikationsdaten).

In einer Ausführungsform ist die Steuereinrichtung ferner dazu ausgebildet, einen von der elektronischen Radeinheit mittels der Radbetriebsdatentelegramme an die Steuereinrichtung gesendeten und die elektronische Radeinheit identifizierenden Identifikationscode zu verwenden, um anhand dieses Identifikationscodes eine Zuordnung der einzelnen empfangenen Radbetriebsdatentelegramme bzw. der darin enthaltenen Radbetriebsdaten zu einer jeweiligen Verbauposition des betreffenden Fahrzeugrades vornehmen (Lokalisierung).

Alternativ oder zusätzlich kann die Steuereinrichtung dazu ausgebildet sein, einen derartigen Identifikationscode der elektronischen Radeinheit als eine Aufforderung zur Übermittlung der Spezifikationsdaten und/oder für eine Festlegung der konkreten Art der zu übermittelnden Spezifikationsdaten zu interpretieren.

In diesem Fall kann vorteilhaft eine Anpassung der Spezifikationsdaten an die Art der tatsächlich an dem Fahrzeug verbauten elektronischen Radeinheiten erfolgen. Zu diesem Zweck kann die Steuereinrichtung dazu ausgebildet sein, die Spezifikationsdaten an eine Art der elektronischen Radeinheit anzupassen. Die Steuereinrichtung kann dabei insbesondere ausgebildet sein, auf das von der elektronischen Radeinheit gesendete Aufforderungssignal hin die Spezifikationsdaten an die Art der elektronischen Radeinheit anzupassen.

Hierbei kann insbesondere z.B. eine Aufnahme oder Nichtaufnahme jedes der oben bereits erläuterten drei Inhalte (Einstellparameter, Programmcode, Identifikation) in Abhängigkeit von den empfangenen Identifikationscodes der elektronischen Radeinheit vorgesehen werden. Alternativ oder zusätzlich kann auch eine Anpassung von zu übermittelnden Einstellparametern und/oder eines zu übermittelnden Programmcodes in Abhängigkeit von dem empfangenen Identifikationscode der elektronischen Radeinheit vorgenommen werden (z. B. für den Fall, dass verschiedene Radeinheit-Typen verschiedene Einstellparameter bzw. verschiedenen Programmcode benötigen bzw. erwarten).

Alternativ oder zusätzlich zu dieser Nutzung des Identifikationscodes der elektronischen Radeinheit kommt auch in Betracht, dass ein speziell als Aufforderung zur Übermittlung von Spezifikationsdaten vorbestimmtes Aufforderungssignal an die Steuereinrichtung gesendet wird, woraufhin diese eine Übermittlung der Spezifikationsdaten durchführt. Ein solches Aufforderungssignal kann gegebenenfalls auch eine von der elektronischen Radeinheit gewünschte bzw. erforderte Art von Spezifikationsdaten definieren.

Erfindungsgemäß ist die Steuereinrichtung somit dazu ausgebildet, auf ein von der elektronischen Radeinheit gesendetes Aufforderungssignal hin die Spezifikationsdaten an die elektronische Radeinheit zu senden. Das Aufforderungssignal kann dabei, wie bereits erläutert, den Identifikationscode beinhalten und/oder als ein vorbestimmtes Aufforderungssignal ausgebildet sein.

Ein mit wenigstens einer elektronischen Radeinheit der hier beschriebenen Art und/oder einer Steuereinrichtung der hier beschriebenen Art ausgestattetes Radüberwachungssystem kann insbesondere zumindest die Funktionalität einer Reifendrucküberwachung besitzen und somit insbesondere ein Reifendrucküberwachungssystem (TPMS) darstellen.

Alternativ oder zusätzlich zur Erfassung des Reifendrucks an dem betreffenden Fahrzeugrad können im Rahmen der Erfindung jedoch auch andere Radbetriebsparameter des Fahrzeugrades erfasst und zur Erzeugung der entsprechenden Radbetriebsdatentelegramme herangezogen werden, wie z. B. eine Reifentemperatur und/oder eine Beschleunigung an der Anordnungsstelle der elektronischen Radeinheit.

Mittels der Erfassung einer Beschleunigung, insbesondere z. B. einer Radialbeschleunigung, kann durch eine entsprechende Auswertung des Sensorsignals vorteilhaft auch eine momentane Drehgeschwindigkeit und/oder eine momentane Drehstellung des betreffenden Fahrzeugrades bestimmt werden. Die Drehgeschwindigkeit und/oder die Drehstellung können dann z. B. als weitere erfasste Radbetriebsparameter bei der Bildung der Radbetriebsdatentelegramme berücksichtigt werden.

Der Begriff "Radbetriebsparameter" umfasst allgemein jede an dem betreffenden Fahrzeugrad messbare und entsprechend einem Fahrbetrieb veränderbare physikalische Größe (z. B. Reifendruck, Reifentemperatur, Drehgeschwindigkeit etc.).

Die "Radbetriebsdatentelegramme" im Sinne der vorliegenden Anmeldung beinhalten Information über den oder die betreffenden Radbetriebsparameter (z. B. Reifendruckmesswerte, Reifentemperaturmesswerte, Drehgeschwindigkeitsmesswerte etc.) und/oder über wenigstens eine daraus abgeleitete Größe, wie z. B. einen auf eine vorgegebene Temperatur korrigierten Reifendruck.

Zusätzlich zum Senden derartiger den Radbetrieb betreffender Informationen an die Steuereinrichtung kann mittels der Radbetriebsdatentelegramme auch eine Übermittlung der vorerwähnten Raddaten an die Steuereinrichtung vorgesehen sein. Darüber hinaus können mittels der Funksende- und Empfangseinheiten der elektronischen Radeinheiten und der Steuereinrichtung Raddaten von der Steuereinrichtung an die elektronischen Radeinheiten übermittelt werden.

Die Erfindung kann insbesondere zur Radüberwachung bei Kraftfahrzeugen wie z. B. PKWs und LKWs verwendet werden.

Der Begriff "Datenübertragungsprotokoll" bezieht sich im Sinne der vorliegenden Anmeldung auf beliebige Übertragungsdetails bzw. Übertragungsparameter der per Funk übertragenen Radbetriebsdatentelegramme, beispielsweise eine Trägerfrequenz (bzw. einen Funkkanal etc.) des zu sendenden Funksignals, eine Modulationsart der Datenmodulation, zeitliche Parameter betreffend z. B. zeitliche Abstände innerhalb oder zwischen aufeinanderfolgenden Funksignalen und Parameter oder Vorgaben betreffend die Strukturierung und/oder Darstellung der Daten innerhalb der einzelnen Radbetriebsdatentelegramme (z. B. einen Vorspann (englisch header), ein Datenformat etc.).

Die Übermittlung der Spezifikationsdaten von der Steuereinrichtung zu der elektronischen Radeinheit kann insbesondere z. B. per Funk erfolgen, beispielsweise über eine bidirektionale Funkdatenverbindung zwischen der Steuereinrichtung und der elektronischen Radeinheit, die auch zur Übertragung der Radbetriebsdatentelegramme genutzt wird.

Alternativ kommt in Betracht, die Spezifikationsdaten über eine eigens zu diesem Zweck nutzbare weitere Funkverbindung zu übermitteln, etwa indem sowohl die elektronische Radeinheit als auch die fahrzeugseitige Steuereinrichtung mit einer geeigneten Funktionalität (z. B. Bluetooth, insbesondere Bluetooth Low Energy (BLE), WiFi oder dergleichen) ausgestattet sind.

Ferner kommt auch eine Übermittlung der Spezifikationsdaten in beliebiger anderer geeigneter drahtloser Weise in Betracht. Ein Beispiel hierfür ist eine Übermittlung im Rahmen einer Konfiguration (Anlernen) der elektronischen Radeinheit, bei welcher diese in einen Nahbereich einer zur Datenkommunikation geeigneten Fahrzeugeinrichtung gebracht wird. Bei dieser Einrichtung kann es sich z. B. um eine Ladestation zum induktiven Laden von Mobilgeräten handeln. Alternativ kann auch ein anderer geeigneter NFC (englisch "near field communication") -Bereich des Fahrzeuges hierfür vorgesehen bzw. verwendbar sein.

Die Erfindung wird nachfolgend anhand von Ausführungsbeispielen mit Bezug auf die beigefügten Zeichnungen weiter beschrieben. Es zeigen:
- Fig. 1: eine schematische Draufsicht eines mit einem Radüberwachungssystem ausgestatteten Fahrzeuges gemäß eines Ausführungsbeispiels,
- Fig. 2: ein Blockschaltbild einer in dem Radüberwachungssystem von Fig. 1 verwendeten elektronischen Radeinheit und
- Fig. 3: ein Ablaufdiagramm eines mit dem Radüberwachungssystem von Fig. 1 durchgeführten Radüberwachungsverfahrens.

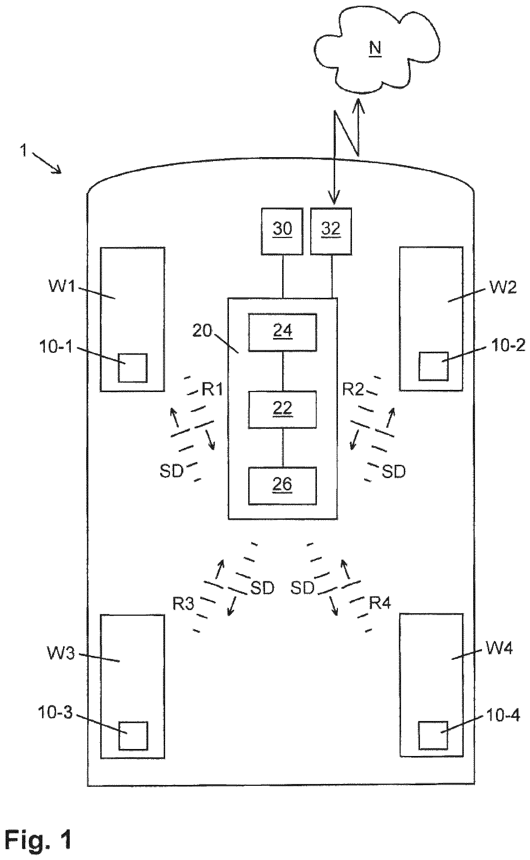

Fig. 1 zeigt ein Fahrzeug 1, hier beispielhaft einen vierrädrigen PKW mit Fahrzeugrädern W1-W4.

Jedes der Fahrzeugräder W1-W4 ist mit einer daran angeordneten elektronischen Radeinheit 10-1,10-2,10-3 bzw. 10-4 zum Erfassen wenigstens eines Radbetriebsparameters des jeweiligen Fahrzeugrades W1, W2, W3 bzw. W4 und zum Senden von zugehörigen Radbetriebsdatentelegrammen R1, R2, R3 bzw. R4 ausgestattet.

Das Senden der Radbetriebsdatentelegramme R1 bis R4 erfolgt gemäß eines Datenübertragungsprotokolls per Funk an eine Steuereinrichtung 20 des Fahrzeuges 1.

Im dargestellten Beispiel ist mit Hilfe der elektronischen Radeinheiten 10-1 bis 10-4 ein Reifendrucküberwachungssystem (TPMS) des Fahrzeuges 1 bereitgestellt.

Dementsprechend erfassen die elektronischen Radeinheiten 10-1 bis 10-4 in der gezeigten Ausführungsform jeweils zumindest den Reifendruck des betreffenden der Fahrzeugräder W1 bis W4, wobei die Fahrzeugräder W1 bis W4 in diesem Beispiel jeweils von einer Felge mit einem daran montierten, luftgefüllten Reifen gebildet sind, und senden die elektronischen Radeinheiten 10-1 bis 10-4 Radbetriebsdaten enthaltend zumindest eine Information über den Reifendruck an die Steuereinrichtung 20 des Fahrzeuges 1. Als weitere zu erfassende Radbetriebsparameter, von denen eine entsprechende Information in die gesendeten Radbetriebsdaten aufgenommen werden kann, kommen z. B. insbesondere eine an dem jeweiligen Reifen gemessene Temperatur oder auch z. B. eine Raddrehstellung und/oder eine Raddrehgeschwindigkeit in Betracht.

Die elektronischen Radeinheiten 10-1 bis 10-4 besitzen in der gezeigten Ausführungsform einen identischen Aufbau und können z. B. an einer Innenseite einer Reifenlauffläche des jeweiligen Reifen angeordnet sein.

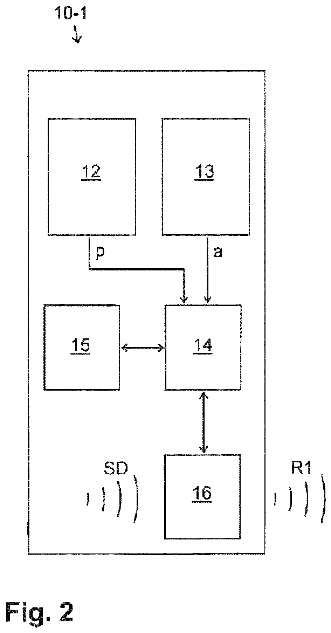

Bezugnehmend auf Fig. 2, die beispielhaft den Aufbau der elektronischen Radeinheit 10-1 zeigt, weist jede der Radeinheiten einen Drucksensor 12 zur Messung des Reifendrucks und zur Bereitstellung eines den Reifendruck repräsentierenden Drucksensorsignals "p" und einen Beschleunigungssensor 13 zur Messung einer Radialbeschleunigung (an der Anbringungsstelle der elektronischen Radeinheit 10-1) und zur Bereitstellung eines diese Radialbeschleunigung repräsentierenden Beschleunigungssensorsignals "a" auf.

Die Sensorsignale, d.h. das Drucksensorsignal "p" und das Beschleunigungssensorsignal "a", werden wie dargestellt einer programmgesteuerten Rechnereinheit 14 der elektronischen Radeinheit 10-1 zur Verarbeitung zugeführt, deren Betrieb durch einen in einer zugordneten digitalen Speichereinheit 15 gespeicherten Programmcode gesteuert wird.

Die Rechnereinheit 14 erzeugt die in Form der Radbetriebsdatentelegramme R1 per Funk zu sendenden Radbetriebsdaten, welche von Zeit zu Zeit an die fahrzeugseitige Steuereinrichtung 20 (Fig. 1) gesendet werden.

Die elektronische Radeinheit 10-1 ist hierfür mit einer Funksende- und Empfangseinheit 16 ausgestattet, mit der die Funksignale bzw. Radbetriebsdatentelegramme R1 gesendet werden.

Die Steuereinrichtung 20 ist, wie in Fig. 1 dargestellt, mit einer Funksende- und Empfangseinheit 26 ausgestattet, mit der die Radbetriebsdatentelegramme R1 bis R4 sämtlicher elektronischer Radeinheiten 10-1 bis 10-4 empfangen und zur Auswertung einer programmgesteuerten Rechnereinheit 22 der Steuereinrichtung 20 zugeführt werden.

Die Messung der Radialbeschleunigung und Bereitstellung des entsprechenden Beschleunigungssensorsignals "a" dient in dem dargestellten Beispiel dazu, anhand einer Auswertung des Sensorsignalverlaufes Werte einer momentanen Raddrehgeschwindigkeit und/oder einer Raddrehstellung des betreffenden Fahrzeugrades W1 zu ermitteln und entsprechende Informationen hierüber in die Radbetriebsdatentelegramme R1 aufzunehmen. Wenngleich in Fig. 2 nicht dargestellt, kann die elektronische Radeinheit 10-1 ferner z. B. einen Temperatursensor zur Messung einer Reifentemperatur und zur Bereitstellung eines diese Temperatur repräsentierenden Sensorsignals aufweisen.

Zurückkommend auf Fig. 1 weist die fahrzeugseitige Steuereinrichtung 20 wie bereits erläutert die programmgesteuerte Rechnereinheit 22 zur Auswertung der in den Radbetriebsdatentelegrammen R1 bis R4 beinhalteten Radbetriebsdaten auf, wobei der Betrieb der Rechnereinheit 22 durch einen in einer zugeordneten digitalen Speichereinheit 24 gespeicherten Programmcode gesteuert wird.

Die elektronischen Radeinheiten 10-1 bis 10-4 in Verbindung mit der Steuereinrichtung 20 bilden in dem dargestellten Beispiel ein Radüberwachungssystem des Fahrzeuges 1, bei welchem an jedem der Fahrzeugräder W1 bis W4 jeweils unter anderem der betreffende Reifendruck gemessen wird und eine Information hierüber mittels der jeweiligen Radbetriebsdatentelegramme R1 bis R4 an die Steuereinrichtung 20 des Fahrzeuges 1 gesendet wird.

Im Falle eines von der Steuereinrichtung 20 anhand der empfangenen Reifendruckdaten festgestellten Reifendruckverlusts an einem der Fahrzeugräder W1 bis W4 kann von der Steuereinrichtung 20 eine entsprechende Abnormalitätsmeldung bereitgestellt werden, insbesondere z. B. eine Warnung an den Fahrer des Fahrzeuges 1 (z. B. über eine Mensch-Maschine-Schnittstelle des Fahrzeuges 1).

Eine Besonderheit der elektronischen Radeinheit 10-1 (und dementsprechend auch der weiteren Radeinheiten 10-2 bis 10-4) besteht darin, dass diese dazu ausgebildet ist, das zum Senden der Radbetriebsdatentelegramme R1 zu verwendende Datenübertragungsprotokoll anhand von Spezifikationsdaten SD festzulegen, die in der gezeigten Ausführungsform zuvor von der Steuereinrichtung 20 des Fahrzeuges 1 in drahtloser Weise an die elektronische Radeinheit 10-1 übermittelt wurden.

In dem dargestellten Beispiel erfolgt das Empfangen von per Funk gesendeten Spezifikationsdaten SD mittels der Funksende- und Empfangseinheit 16 der elektronischen Radeinheit 10-1.

Das zum Senden der Radbetriebsdatentelegramme R1 zu verwendende Datenübertragungsprotokoll wird in programmgesteuerter Weise durch die Rechnereinheit 14 anhand der von der Funksende- und Empfangseinheit 16 zu der Rechnereinheit 14 weitergeleiteten Spezifikationsdaten SD festgelegt.

Die Festlegung des Datenübertragungsprotokolls, also die Festlegung der konkreten Art und Weise, wie die Radbetriebsdaten in den einzelnen Radbetriebsdatentelegrammen R1 dargestellt und strukturiert sind (und ggf. die Festlegung bestimmter funktechnischer Parameter der Funksignale), wird in dem dargestellten Beispiel durch eine in der Speichereinheit 15 gespeicherte Software gesteuert. Hierbei können insbesondere eine oder mehrere der folgenden Funktionalitäten implementiert sein:
Beispielsweise kann vorgesehen sein, dass die elektronische Radeinheit 10-1 in den Spezifikationsdaten SD beinhaltete Einstellparameter als solche erkennt und ein dem Grunde nach durch die Software bereits definiertes Datenübertragungsprotokoll im Sinne einer Feineinstellung gemäß der empfangenen Einstellparameter einstellt.

Alternativ oder zusätzlich kann vorgesehen sein, dass die elektronische Radeinheit 10-1 in den Spezifikationsdaten SD einen Programmcode erkennt und diesen Programmcode speziell für eine Steuerung der Erzeugung der Radbetriebsdatentelegramme R1 auf der Rechnereinheit ablaufen lässt.

Schließlich kann alternativ oder zusätzlich vorgesehen sein, dass die elektronische Radeinheit 10-1 eine in den Spezifikationsdaten SD beinhaltete Identifikation der Steuereinrichtung 20 und/oder des Fahrzeuges 1 erkennt und gemäß dieser Identifikation das zu verwendende Datenübertragungsprotokoll aus einer Mehrzahl von in der elektronischen Radeinheit 10-1 bzw. in der Speichereinheit 15 der elektronischen Radeinheit 10-1 vorab gespeicherten Datenübertragungsprotokollen auswählt.

Die Identifikation kann hierbei z. B. einen bestimmten Typ (Modell, Versionsnummer, etc.) der Steuereinrichtung 20 bzw. einen bestimmten Typ des Fahrzeuges 1 (Hersteller, Modellreihe, Baujahr etc.) eindeutig kennzeichnen.

Die Auswahl kann z. B. als ein Abruf des Datenübertragungsprotokolls (bzw. von zur Festlegung desselben erforderlicher Daten) aus einer in der Speichereinheit 15 vorab gespeicherten Nachschlagtabelle bewerkstelligt werden.

Die Steuereinrichtung 20 ist in dem dargestellten Beispiel dazu ausgebildet, die Spezifikationsdaten SD mittels der Funksende- und Empfangseinheit 26 an die elektronischen Radeinheiten 10-1 bis 10-4 zu senden, wie dies in Fig. 1 veranschaulicht ist. Hinsichtlich des Zeitpunktes der Übermittlung der Spezifikationsdaten SD gibt es vielfältige Möglichkeiten.

Beispielsweise kann dies von Zeit zu Zeit erfolgen, etwa in regelmäßigen zeitlichen Abständen. Hierbei kann auch eine Variation der zeitlichen Abstände in Abhängigkeit von bestimmten Umständen vorgesehen sein, etwa ein gehäuftes Senden unmittelbar nach Inbetriebnahme der Steuereinrichtung 20 und/oder nach Beginn eines Fahrbetriebes des Fahrzeuges 1.

Darüber hinaus ist denkbar, dass von einem Benutzer, z. B. über eine Mensch-Maschine-Schnittstelle des Fahrzeuges 1, ein Aussenden der Spezifikationsdaten SD mittels der Steuereinrichtung 20 auslösbar ist.

Damit kann z. B. Werkstattpersonal nach einem Ersatz einer elektronischen Radeinheit (z. B. im Rahmen eines Reifen- bzw. Radwechsels) ein Anlernen der neuen elektronischen Radeinheit im Hinblick auf das zu verwendende Datenübertragungsprotokoll bewerkstelligen.

Alternativ oder zusätzlich zu einem von Zeit zu Zeit vorgesehenen Versand der Spezifikationsdaten SD kann außerdem vorgesehen sein, dass ein speziell als Aufforderung zur Übermittlung der Spezifikationsdaten SD vorbestimmtes bzw. vorab festgelegtes Aufforderungssignal in z. B. drahtloser Weise an die Steuereinrichtung 20 gesendet wird, woraufhin die Steuereinrichtung 20 eine Übermittlung der Spezifikationsdaten SD durchführt.

Falls, wie dies in dem dargestellten Ausführungsbeispiel vorgesehen ist, eine bidirektionale Funkdatenverbindung zwischen der Steuereinrichtung 20 und jeder der elektronischen Radeinheiten 10-1 bis 10-4 vorhanden ist, so kann eine Aufforderung vorteilhaft auch über diese Verbindung an die Steuereinrichtung 20 übermittelt werden.

Alternativ oder zusätzlich zu einer Übermittelbarkeit der Aufforderung per Funk, sei es unter Nutzung der Funksende- und Empfangseinheiten 16 und 26, oder mittels separat von diesen vorgesehener Nahbereichskommunikationseinrichtungen (z. B. nach Bluetooth- oder WiFi-Standard oder dergleichen), könnte die Übermittlung auch z.B. über eine fahrzeugseitige Ladestation zum induktiven Laden von Mobilgeräten erfolgen.

In Fig. 1 ist beispielhaft eine derartige Induktiv-Ladestation 30 mit der zusätzlichen Funktionalität einer Datenübertragung gezeigt, die z. B. von Werkstattpersonal zum Anlernen einer elektronischen Radeinheit nutzbar ist, indem die elektronische Radeinheit in den Wirkungsbereich der Induktiv-Ladestation 30 gebracht wird, um so eine Aufforderung zur Übermittlung der Spezifikationsdaten SD an die Steuereinrichtung 20 zu übermitteln.

Alternativ oder zusätzlich zur Aussendung der Spezifikationsdaten SD mittels der Funksende- und Empfangseinheit 26 kommt in diesem Fall auch in Betracht, die Spezifikationsdaten SD über die Induktiv-Ladestation 30 an die elektronische Radeinheit zu übermitteln.

Die von der Steuereinrichtung 20 übermittelten Spezifikationsdaten SD können insbesondere einen oder mehrere der weiter oben bereits erläuterten Inhalte (Einstellparameter, Programmcode, Identifikation) beinhalten.

Darüber hinaus können mittels der Funksende- und Empfangseinheiten 16 und 26 und/oder der Induktiv-Ladestation 30 und/oder anderer Nahbereichskommunikationseinrichtungen Raddaten von den elektronischen Radeinheiten 10-1 bis 10-4 an die Steuereinrichtung 20 und/oder von der Steuereinrichtung 20 an die elektronischen Radeinheiten 10-1 bis 10-4 übermittelt werden. Die Raddaten können dabei z. B. Felgen- und/oder Reifenabmessungen wie Felgendurchmesser bzw. Reifendurchmesser sowie sonstige Eigenschaften (z. B. Hersteller, Reifentyp, Reifen-DOT-Code etc.) des betreffenden Fahrzeugrades W1-W4 beinhalten.

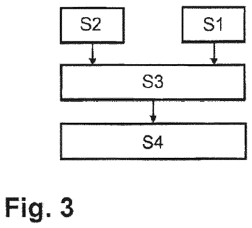

In Fig. 3 ist ein mit dem beschriebenen Radüberwachungssystem durchgeführtes Verfahren zur Radüberwachung in seinen wesentlichen Schritten veranschaulicht.

In einem Schritt S1 werden Spezifikationsdaten SD von der Steuereinrichtung 20 an die elektronischen Radeinheiten 10-1 bis 10-4 übermittelt und in einem Schritt S2 werden von den elektronischen Radeinheiten 10-1 bis 10-4 jeweils Radbetriebsparameter der betreffenden Fahrzeugrades erfasst und weiterverarbeitet (gegebenenfalls ist der Schritt S1 auch durch eine entsprechende Aufforderung auslösbar, wie bereits erläutert wurde).

In einem Schritt S3 werden von den elektronischen Radeinheiten 10-1 bis 10-4 jeweils Radbetriebsdatentelegramme R1, R2, R3 bzw. R4 erzeugt, die jeweils in bestimmten zeitlichen Abständen in einem Schritt S4 mittels der jeweiligen Funksende- und Empfangseinheit 26 zu der Steuereinrichtung 20 gesendet werden.

In einer Weiterbildung dieses Verfahrens bzw. des oben beschriebenen Radüberwachungssystems ist die Steuereinrichtung 20 ausgestattet oder verbunden mit einer Mobilfunkeinheit zur Ermöglichung einer Datenkommunikation zwischen der Steuereinrichtung 20 und einer externen Einrichtung wie z. B. einem Internetserver.

In Fig. 1 ist beispielhaft eine derartige Mobilfunkeinheit 32 dargestellt, die über ein Mobilfunknetz N einen Internetzugang des Fahrzeuges 1 realisiert.

Diese Weiterbildung besitzt im Rahmen der Erfindung insbesondere die folgenden zwei Vorteile: Zum einen wird der Steuereinrichtung 20 damit ermöglicht, die erforderlichen Spezifikationsdaten SD teilweise oder vollständig von der genannten externen Einrichtung (z. B. einem Internetdatenserver) zu beziehen, was eine entsprechende Speicherung derartiger Daten bzw. Datenteile in dem Fahrzeug 1 entbehrlich macht. Die entsprechenden Daten können z.B. von der Steuereinrichtung 20 (ggf. unter Übermittlung einer Identifikation der Steuereinrichtung 20 bzw. des Fahrzeuges 1) von der externen Einrichtung angefordert werden. Zum anderen kann die Mobilfunkeinheit 32 vorteilhaft in dem Fall genutzt werden, in dem eine elektronische Radeinheit eine Aufforderung zur Übermittlung von Spezifikationsdaten SD an die Steuereinrichtung 20 sendet und hierbei, als Teil der Aufforderung oder separat davon, einen Identifikationscode dieser elektronischen Radeinheit an die Steuereinrichtung 20 übermittelt. In diesem Fall kann die Aufforderung über die Mobilfunkkommunikation an die externe Einrichtung weitergeleitet werden, woraufhin über die Mobilfunkkommunikation die angeforderten und an die elektronische Radeinheit angepassten Spezifikationsdaten SD an die Steuereinrichtung 20 übermittelt werden, von welcher aus die Spezifikationsdaten SD weiter an die elektronische Radeinheit übermittelt werden.

### Bezugszeichenliste

- 1: Fahrzeug
- W1 bis W4: Fahrzeugräder
- 10-1 bis 10-4: elektronische Radeinheiten
- R1 bis R4: Radbetriebsdatentelegramme
- 12: Drucksensor
- p: Drucksensorsignal
- 13: Beschleunigungssensor
- a: Beschleunigungssensorsignal
- 14: Rechnereinheit
- 15: Speichereinheit
- 16: Funksende- und Empfangseinheit
- 20: Steuereinrichtung
- 22: Rechnereinheit
- 24: Speichereinheit
- 26: Funksende- und Empfangseinheit
- SD: Spezifikationsdaten
- 30: Induktiv-Ladestation
- 32: Mobilfunkeinheit
- N: Mobilfunknetz
- S1: Schritt
- S2: Schritt
- S3: Schritt
- S4: Schritt

## Patentansprüche

1. Elektronische Radeinheit (10-1 bis 10-4) für ein Radüberwachungssystem eines mit Fahrzeugrädern (W1-W4) ausgestatteten Fahrzeuges (1),
wobei die elektronische Radeinheit (10-1 bis 10-4) dazu ausgebildet ist, an einem der Fahrzeugräder (W1-W4) angeordnet wenigstens einen Radbetriebsparameter des Fahrzeugrades (W1-W4) zu erfassen und Radbetriebsdatentelegramme (R1-R4) gemäß eines Datenübertragungsprotokolls per Funk an eine zum Empfangen und Auswerten der Radbetriebsdatentelegramme (R1-R4) ausgebildete Steuereinrichtung (20) des Fahrzeuges (1) zu senden und
wobei die elektronische Radeinheit (10-1 bis 10-4) ferner dazu ausgebildet ist, das zum Senden der Radbetriebsdatentelegramme (R1-R4) zu verwendende Datenübertragungsprotokoll anhand von Spezifikationsdaten (SD) festzulegen, die zuvor von der Steuereinrichtung (20) des Fahrzeuges (1) an die elektronische Radeinheit (10-1 bis 10-4) übermittelt wurden,
**dadurch gekennzeichnet, dass** die elektronische Radeinheit (10-1 bis 10-4) dazu ausgebildet ist, an die Steuereinrichtung (20) ein Aufforderungssignal als Aufforderung zur Übermittlung der Spezifikationsdaten (SD) zu senden.

2. Elektronische Radeinheit (10-1 bis 10-4) nach Anspruch 1, aufweisend eine Funkempfangseinheit (16) zum Empfangen von per Funk gesendeten Spezifikationsdaten (SD).

3. Elektronische Radeinheit (10-1 bis 10-4) nach Anspruch 1 oder 2, wobei die Spezifikationsdaten (SD) Einstellparameter beinhalten und die elektronische Radeinheit (10-1 bis 10-4) dazu ausgebildet ist, das zu verwendende Datenübertragungsprotokoll gemäß der Einstellparameter einzustellen.

4. Elektronische Radeinheit (10-1 bis 10-4) nach einem der vorangehenden Ansprüche, wobei die Spezifikationsdaten (SD) einen Programmcode beinhalten und die elektronische Radeinheit (10-1 bis 10-4) dazu ausgebildet ist, den Programmcode für eine Steuerung einer Erzeugung der Radbetriebsdatentelegramme (R1-R4) ablaufen zu lassen.

5. Elektronische Radeinheit (10-1 bis 10-4) nach einem der vorangehenden Ansprüche, wobei die Spezifikationsdaten (SD) eine Identifikation der Steuereinrichtung (20) und/oder des Fahrzeuges (1) beinhalten und die elektronische Radeinheit (10-1 bis 10-4) dazu ausgebildet ist, das zu verwendende Datenübertragungsprotokoll aus einer Mehrzahl von in der elektronischen Radeinheit (10-1 bis 10-4) gespeicherten Datenübertragungsprotokollen gemäß der Identifikation auszuwählen.

6. Steuereinrichtung (20) für ein Radüberwachungssystem eines mit Fahrzeugrädern (W1-W4) ausgestatteten Fahrzeuges (1),
wobei wenigstens eines der Fahrzeugräder (W1-W4) mit einer daran angeordneten elektronischen Radeinheit (10-1 bis 10-4) zum Erfassen wenigstens eines Radbetriebsparameters des jeweiligen Fahrzeugrades (W1-W4) und zum Senden von Radbetriebsdatentelegrammen (R1-R4) gemäß eines Datenübertragungsprotokolls per Funk an die Steuereinrichtung (20) ausgestattet ist,
wobei die Steuereinrichtung (20) dazu ausgebildet ist, die Radbetriebsdatentelegramme (R1-R4) zu empfangen und auszuwerten und
wobei die Steuereinrichtung (20) ferner dazu ausgebildet ist, Spezifikationsdaten (SD) an die elektronische Radeinheit (10-1 bis 10-4) zu übermitteln, anhand derer der elektronischen Radeinheit (10-1 bis 10-4) eine Festlegung des zum Senden der Radbetriebsdatentelegramme (R1-R4) zu verwendenden Datenübertragungsprotokolls ermöglicht wird,
**dadurch gekennzeichnet, dass** die Steuereinrichtung (20) ausgebildet ist, auf ein von der elektronischen Radeinheit (10-1 bis 10-4) gesendetes Aufforderungssignal hin die Spezifikationsdaten (SD) an die elektronische Radeinheit (10-1 bis 10-4) zu senden.

7. Steuereinrichtung (20) nach Anspruch 6, wobei die Steuereinrichtung (20) dazu ausgebildet ist, die Spezifikationsdaten (SD) zumindest teilweise von einem externen Datenserver zu beziehen.

8. Steuereinrichtung (20) nach Anspruch 6 oder 7, zudem aufweisend eine Funksendeeinheit (26) zum Senden der Spezifikationsdaten (SD) per Funk an die elektronische Radeinheit (10-1 bis 10-4).

9. Steuereinrichtung (20) nach einem der Ansprüche 6 bis 8, wobei die Spezifikationsdaten (SD) Einstellparameter beinhalten, um der elektronischen Radeinheit (10-1 bis 10-4) zu ermöglichen, das zu verwendende Datenübertragungsprotokoll gemäß der Einstellparameter einzustellen.

10. Steuereinrichtung (20) nach einem der Ansprüche 6 bis 9, wobei die Spezifikationsdaten (SD) einen Programmcode beinhalten, um der elektronischen Radeinheit (10-1 bis 10-4) zu ermöglichen, den Programmcode für eine Steuerung einer Erzeugung der Radbetriebsdatentelegramme (R1-R4) ablaufen zu lassen.

11. Steuereinrichtung (20) nach einem der Ansprüche 6 bis 10, wobei die Spezifikationsdaten (SD) eine Identifikation der Steuereinrichtung (20) und/oder des Fahrzeuges (1) beinhalten, um der elektronischen Radeinheit (10-1 bis 10-4) zu ermöglichen, das zu verwendende Datenübertragungsprotokoll aus einer Mehrzahl von in der elektronischen Radeinheit (10-1 bis 10-4) gespeicherten Datenübertragungsprotokollen gemäß der Identifikation auszuwählen.

12. Steuereinrichtung (20) nach einem der Ansprüche 6 bis 11, wobei die Steuereinrichtung (20) ausgebildet ist, die Spezifikationsdaten (SD) an eine Art der elektronischen Radeinheit (10-1 bis 10-4) anzupassen.

13. Radüberwachungssystem (10-1 bis 10-4, 20) für ein mit Fahrzeugrädern (W1-W4) ausgestattetes Fahrzeug (1), aufweisend eine elektronische Radeinheit (10-1 bis 10-4) nach einem der Ansprüche 1 bis 5 und/oder eine Steuereinrichtung (20) nach einem der Ansprüche 6 bis 12.

14. Verfahren zur Radüberwachung in einem mit Fahrzeugrädern (W1-W4) ausgestatteten Fahrzeug (1),
wobei an wenigstens einem der Fahrzeugräder (W1-W4) wenigstens ein Radbetriebsparameter des Fahrzeugrades (W1-W4) mittels einer an dem Fahrzeugrad (W1-W4) angeordneten elektronischen Radeinheit (10-1 bis 10-4) erfasst wird und mittels der elektronischen Radeinheit (10-1 bis 10-4) Radbetriebsdatentelegramme (R1-R4) gemäß eines Datenübertragungsprotokolls per Funk an eine zum Empfangen und Auswerten der Radbetriebsdatentelegramme (R1-R4) ausgebildete Steuereinrichtung (20) des Fahrzeuges (1) gesendet werden und
wobei in der elektronischen Radeinheit (10-1 bis 10-4) das zum Senden der Radbetriebsdatentelegramme (R1-R4) verwendete Datenübertragungsprotokoll anhand von Spezifikationsdaten (SD) festgelegt wird, die zuvor von der Steuereinrichtung (20) des Fahrzeuges (1) an die elektronische Radeinheit (10-1 bis 10-4) übermittelt wurden,
**dadurch gekennzeichnet, dass** die elektronische Radeinheit (10-1 bis 10-4) dazu ausgebildet ist, an die Steuereinrichtung (20) ein Aufforderungssignal als Aufforderung zur Übermittlung der Spezifikationsdaten (SD) zu senden und die Steuereinrichtung (20) ausgebildet ist, auf das von der elektronischen Radeinheit (10-1 bis 10-4) gesendete Aufforderungssignal hin die Spezifikationsdaten (SD) an die elektronische Radeinheit (10-1 bis 10-4) zu senden.

15. Computerprogrammprodukt aufweisend einen Programmcode, der auf einer elektronischen Radeinheit nach Anspruch und einer Steuereinheit nach Anspruch 6 ausgeführt ein Verfahren nach Anspruch 14 durchführt.

## Claims

1. Electronic wheel unit (10-1 to 10-4) for a wheel-monitoring system of a vehicle (1) which is equipped with vehicle wheels (W1-W4),
wherein the electronic wheel unit (10-1 to 10-4) is designed to detect, while being arranged on one of the vehicle wheels (W1-W4), at least one wheel operating parameter of the vehicle wheel (W1-W4) and to transmit wheel operating data telegrams (R1-R4) by radio to a control device (20) of the vehicle (1) according to a data transmission protocol, which control device (20) is designed to receive and evaluate the wheel operating data telegrams (R1-R4), and
wherein the electronic wheel unit (10-1 to 10-4) is also designed to define the data transmission protocol, to be used to transmit the wheel operating data telegrams (R1-R4), on the basis of specification data (SD) which have previously been transferred from the control device (20) of the vehicle (1) to the electronic wheel unit (10-1 to 10-4),
**characterized in that** the electronic wheel unit (10-1 to 10-4) is designed to transmit, to the control device (20), a request signal as a request to transfer the specification data (SD).

2. Electronic wheel unit (10-1 to 10-4) according to Claim 1, having a radio receiver unit (16) for receiving specification data (SD) transmitted by radio.

3. Electronic wheel unit (10-1 to 10-4) according to Claim 1 or 2, wherein the specification data (SD) contain setting parameters, and the electronic wheel unit (10-1 to 10-4) is designed to set the data transmission protocol to be used, according to the setting parameters.

4. Electronic wheel unit (10-1 to 10-4) according to one of the preceding claims, wherein the specification data (SD) contain a program code, and the electronic wheel unit (10-1 to 10-4) is designed to make the program code run in order to control generation of the wheel operating data telegrams (R1-R4) .

5. Electronic wheel unit (10-1 to 10-4) according to one of the preceding claims, wherein the specification data (SD) contain an identification of the control device (20) and/or of the vehicle (1), and the electronic wheel unit (10-1 to 10-4) is designed to select the data transmission protocol to be used from a multiplicity of data transmission protocols, stored in the electronic wheel unit (10-1 to 10-4), according to the identification.

6. Control device (20) for a wheel-monitoring system of a vehicle (1) which is equipped with vehicle wheels (W1-W4),
wherein at least one of the vehicle wheels (W1-W4) is equipped with an electronic wheel unit (10-1 to 10-4), arranged thereon, for detecting at least one wheel operating parameter of the respective vehicle wheel (W1-W4) and for transmitting wheel operating data telegrams (R1-R4) by radio to the control device (20) according to a data transmission protocol,
wherein the control device (20) is designed to receive and evaluate the wheel operating data telegrams (R1-R4) and
wherein the control device (20) is also designed to transfer specification data (SD) to the electronic wheel unit (10-1 to 10-4), on the basis of which specification data (SD) the electronic wheel unit (10-1 to 10-4) is enabled to define the data transmission protocol to be used to transmit the wheel operating data telegrams (R1-R4),
**characterized in that** the control device (20) is designed to transmit the specification data (SD) to the electronic wheel unit (10-1 to 10-4) in response to a request signal transmitted by the electronic wheel unit (10-1 to 10.4).

7. Control device (20) according to Claim 6, wherein the control device (20) is designed to obtain the specification data (SD) at least partially from an external data server.

8. Control device (20) according to Claim 6 or 7, additionally having a radio transmitter unit (26) for transmitting the specification data (SD) by radio to the electronic wheel unit (10-1 to 10-4).

9. Control device (20) according to one of Claims 6 to 8, wherein the specification data (SD) contain setting parameters for enabling the electronic wheel unit (10-1 to 10-4) to set the data transmission protocol to be used, according to the setting parameters.

10. Control device (20) according to one of Claims 6 to 9, wherein the specification data (SD) contain a program code for enabling the electronic wheel unit (10-1 to 10-4) to make the program code run in order to control generation of the wheel operating data telegrams (R1-R4).

11. Control device (20) according to one of Claims 6 to 10, wherein the specification data (SD) contain an identification of the control device (20) and/or of the vehicle (1) for enabling the electronic wheel unit (10-1 to 10-4) to select the data transmission protocol to be used from a multiplicity of data transmission protocols, stored in the electronic wheel unit (10-1 to 10-4), according to the identification.

12. Control device (20) according to one of Claims 6 to 11, wherein the control device (20) is designed to adapt the specification data (SD) to a type of the electronic wheel unit (10-1 to 10-4).

13. Wheel-monitoring system (10-1 to 10-4, 20) for a vehicle (1) which is equipped with vehicle wheels (W1-W4), having an electronic wheel unit (10-1 to 10-4) according to one of Claims 1 to 5 and/or a control device (20) according to one of Claims 6 to 12.

14. Method for monitoring wheels in a vehicle (1) equipped with vehicle wheels (W1-W4),
wherein, on at least one of the vehicle wheels (W1-W4), at least one wheel operating parameter of the vehicle wheel (W1-W4) is detected by means of an electronic wheel unit (10-1 to 10-4) arranged on the vehicle wheel (W1-W4), and wheel operating data telegrams (R1-R4) are transmitted by radio, by means of the electronic wheel unit (10-1 to 10-4), to a control device (20) of the vehicle (1) according to a data transmission protocol, which control device (20) is designed to receive and evaluate the wheel operating data telegrams (R1-R4), and
wherein, in the electronic wheel unit (10-1 to 10-4), the data transmission protocol which is used to transmit the wheel operating data telegrams (R1-R4) is defined on the basis of specification data (SD) which have previously been transferred from the control device (20) of the vehicle (1) to the electronic wheel unit (10-1 to 10-4),
**characterized in that** the electronic wheel unit (10-1 to 10-4) is designed to transmit, to the control device (20), a request signal as a request to transfer the specification data (SD), and the control device (20) is designed to transmit the specification data (SD) to the electronic wheel unit (10-1 to 10-4) in response to the request signal transmitted by the electronic wheel unit (10-1 to 10.4).

15. Computer program product having a program code which, when executed on an electronic wheel unit according to Claim 1 and a control unit according to Claim 6, carries out a method according to Claim 14.

## Revendications

1. Unité de roue électronique (10-1 à 10-4) pour un système de surveillance de roue d'un véhicule (1) équipé de roues de véhicule (W1-W4),
l'unité de roue électronique (10-1 à 10-4) étant configurée pour, disposée au niveau de l'une des roues de véhicule (W1-W4), acquérir au moins un paramètre de fonctionnement de roue de la roue de véhicule (W1-W4) et envoyer des télégrammes de données de fonctionnement de roue (R1-R4), conformément à un protocole de transmission de données, par voie radioélectrique à un dispositif de commande (20) du véhicule (1) configuré pour la réception et l'interprétation des télégrammes de données de fonctionnement de roue (R1-R4) et
l'unité de roue électronique (10-1 à 10-4) étant en outre configurée pour déterminer le protocole de transmission de données à utiliser pour l'envoi des télégrammes de données de fonctionnement de roue (R1-R4) à l'aide de données de spécification (SD) qui ont été préalablement communiquées à l'unité de roue électronique (10-1 à 10-4) par le dispositif de commande (20) du véhicule (1), **caractérisée en ce que** l'unité de roue électronique (10-1 à 10-4) est configurée pour envoyer au dispositif de commande (20) un signal d'invitation en tant qu'invitation à communiquer les données de spécification (SD) .

2. Unité de roue électronique (10-1 à 10-4) selon la revendication 1, comprenant une unité de réception radioélectrique (16) destinée à recevoir les données de spécification (SD) envoyées par voie radioélectrique.

3. Unité de roue électronique (10-1 à 10-4) selon la revendication 1 ou 2, les données de spécification (SD) contenant des paramètres de réglage et l'unité de roue électronique (10-1 à 10-4) étant configurée pour régler le protocole de transmission de données conformément aux paramètres de réglage.

4. Unité de roue électronique (10-1 à 10-4) selon l'une des revendications précédentes, les données de spécification (SD) contenant un code de programme et l'unité de roue électronique (10-1 à 10-4) étant configurée pour laisser exécuter le code de programme pour une commande d'une génération des télégrammes de données de fonctionnement de roue (R1-R4).

5. Unité de roue électronique (10-1 à 10-4) selon l'une des revendications précédentes, les données de spécification (SD) contenant une identification du dispositif de commande (20) et/ou du véhicule (1) et l'unité de roue électronique (10-1 à 10-4) étant configurée pour sélectionner, conformément à l'identification, le protocole de transmission de données à utiliser à partir d'une pluralité de protocoles de transmission de données enregistrés dans l'unité de roue électronique (10-1 à 10-4).

6. Dispositif de commande (20) pour un système de surveillance de roue d'un véhicule (1) équipé de roues de véhicule (W1-W4),
au moins l'une des roues de véhicule (W1-W4) étant équipée d'une unité de roue électronique (10-1 à 10-4) disposée au niveau de celle-ci en vue d'acquérir au moins un paramètre de fonctionnement de roue de la roue de véhicule (W1-W4) respective et pour envoyer des télégrammes de données de fonctionnement de roue (R1-R4), conformément à un protocole de transmission de données, par voie radioélectrique au dispositif de commande (20) le dispositif de commande (20) étant configuré pour recevoir et interpréter les télégrammes de données de fonctionnement de roue (R1-R4) et
le dispositif de commande (20) étant en outre configuré pour communiquer des données de spécification (SD) à l'unité de roue électronique (10-1 à 10-4), à l'aide desquelles l'unité de roue électronique (10-1 à 10-4) obtient la possibilité de déterminer le protocole de transmission de données à utiliser pour l'envoi des télégrammes de données de fonctionnement de roue (R1-R4), **caractérisé en ce que** le dispositif de commande (20) est configuré pour envoyer les données de spécification (SD) à l'unité de roue électronique (10-1 à 10-4) en présence d'un signal d'invitation envoyé par l'unité de roue électronique (10-1 à 10-4).

7. Dispositif de commande (20) selon la revendication 6, le dispositif de commande (20) étant configuré pour obtenir les données de spécification (SD) au moins partiellement auprès d'un serveur externe.

8. Dispositif de commande (20) selon la revendication 6 ou 7, comprenant en outre une unité d'émission radioélectrique (26) destinée à envoyer les données de spécification (SD) par voie radioélectrique à l'unité de roue électronique (10-1 à 10-4).

9. Dispositif de commande (20) selon l'une des revendications 6 à 8, les données de spécification (SD) contenant des paramètres de réglage afin de donner à l'unité de roue électronique (10-1 à 10-4) la possibilité de régler le protocole de transmission de données conformément aux paramètres de réglage.

10. Dispositif de commande (20) selon l'une des revendications 6 à 9, les données de spécification (SD) contenant un code de programme afin de donner à l'unité de roue électronique (10-1 à 10-4) la possibilité de laisser exécuter le code de programme pour une commande d'une génération des télégrammes de données de fonctionnement de roue (R1-R4).

11. Dispositif de commande (20) selon l'une des revendications 6 à 10, les données de spécification (SD) contenant une identification du dispositif de commande (20) et/ou du véhicule (1) afin de donner à l'unité de roue électronique (10-1 à 10-4) la possibilité de sélectionner, conformément à l'identification, le protocole de transmission de données à utiliser à partir d'une pluralité de protocoles de transmission de données enregistrés dans l'unité de roue électronique (10-1 à 10-4) .

12. Dispositif de commande (20) selon l'une des revendications 6 à 11, le dispositif de commande (20) étant configuré pour adapter les données de spécification (SD) à un type de l'unité de roue électronique (10-1 à 10-4) .

13. Système de surveillance de roue (10-1 à 10-4, 20) pour un véhicule (1) équipé de roues de véhicule (W1-W4), comprenant une unité de roue électronique (10-1 à 10-4) selon l'une des revendications 1 à 5 et/ou un dispositif de commande (20) selon l'une des revendications 6 à 12.

14. Procédé de surveillance de roue dans un véhicule (1) équipé de roues de véhicule (W1-W4),
au moins un paramètre de fonctionnement de roue d'au moins l'une des roues de véhicule (W1-W4)étant acquis au niveau de la roue de véhicule (W1-W4) au moyen d'une unité de roue électronique (10-1 à 10-4) disposée au niveau de la roue de véhicule (W1-W4) et des télégrammes de données de fonctionnement de roue (R1-R4) étant envoyés au moyen de l'unité de roue électronique (10-1 à 10-4), conformément à un protocole de transmission de données, par voie radioélectrique à un dispositif de commande (20) du véhicule (1) configuré pour la réception et l'interprétation des télégrammes de données de fonctionnement de roue (R1-R4) et
le protocole de transmission de données à utiliser pour l'envoi des télégrammes de données de fonctionnement de roue (R1-R4) étant déterminé dans l'unité de roue électronique (10-1 à 10-4) à l'aide de données de spécification (SD) qui ont été préalablement communiquées à l'unité de roue électronique (10-1 à 10-4) par le dispositif de commande (20) du véhicule (1), **caractérisé en ce que** l'unité de roue électronique (10-1 à 10-4) est configurée pour envoyer au dispositif de commande (20) un signal d'invitation en tant qu'invitation à communiquer les données de spécification (SD) et le dispositif de commande (20) est configuré pour, en présence du signal d'invitation envoyé par l'unité de roue électronique (10-1 à 10-4), envoyer les données de spécification (SD) à l'unité de roue électronique (10-1 à 10-4).

15. Produit de programme informatique comprenant un code de programme qui, exécuté sur une unité de roue électronique selon la revendication 1 et une unité de commande selon la revendication 6, met en œuvre un procédé selon la revendication 14.
